(19) Europäisches Patentamt
European Patent Office
Office européen des brevets

(11) Publication number: **0 050 523 A2**

# (12) EUROPEAN PATENT APPLICATION

(21) Application number: 81304926.9

(22) Date of filing: 20.10.81

(51) Int. Cl.³: H 04 B 13/00

(30) Priority: 20.10.80 US 198324
20.10.80 US 198325
20.10.80 US 198326
20.10.80 US 198553

(43) Date of publication of application: 28.04.82
Bulletin 82/17

(84) Designated Contracting States: BE DE FR GB IT NL

(71) Applicant: Honeywell Information Systems Inc.,
200 Smith Street, Waltham Massachusetts 02154 (US)

(72) Inventor: Gelinas, Raymond C., 10 Crest Street, Concord
Massachusetts 01742 (US)

(74) Representative: Harman, Michael Godfrey et al,
Honeywell Control Systems Ltd. Patent Department
Charles Square, Bracknell Berks RG12 1EB (GB)

## (54) Electromagnetic transmission using a curl-free magnetic vector potential field.

(57) A system for transmission of information using a curl-free magnetic vector potential radiation field. The system includes current-carrying apparatus for generating a predominantly curl-free magnetic vector potential field coupled to apparatus for modulating the current applied to the field generating apparatus. Receiving apparatus includes a detector with observable properties that vary with the application of an applied curl-free magnetic vector potential field. Analyzing apparatus for determining the information content of modulation imposed on the curl-free vector potential field is coupled to the detector. The magnetic vector potential field can be established in materials that are not capable of transmitting more common electromagnetic radiation.

The receiver may detect changes of phase of the sine function which determines the Josephson junction current. The distance of the transmitter can be determined from the strength of the received signal. By generating a field of predetermined orientation and using a detector responsive to orientation, the direction of the transmitter may be determined. A rotating field may be used for this.

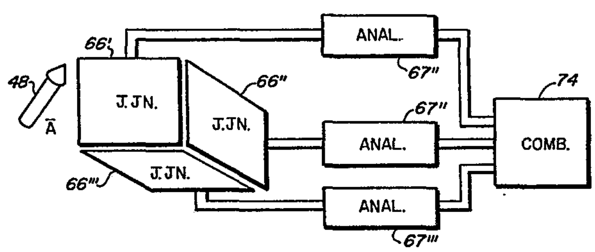


EP 0 050 523 A2

# ELECTROMAGNETIC TRANSMISSION USING A CURL-FREE MAGNETIC VECTOR POTENTIAL FIELD

The present invention relates to the transmission of information by means of an electromagnetic field, and more particularly by means of a curl-free magnetic vector potential field. The technique may be used for the transfer of information from one location to another, or for the measurement of distance and/or direction of one location to another.

It is known to provide systems for the transfer of information utilizing electromagnetic fields which are solutions to Maxwell's equations. These information transfer systems include apparatus for generating modulated electromagnetic fields and apparatus for detecting and demodulating the generated electromagnetic fields. Examples of the prior type information transfer systems include radio and television systems, microwave systems and optical systems.

The Maxwell equations, which govern the transfer of information by electromagnetic fields can be written:

1. $\text{CURL } \bar{E} + \frac{\partial \bar{B}}{\partial t} = 0$

2. $\text{CURL } \bar{H} - \frac{\partial \bar{D}}{\partial t} = \bar{J}$

3. $\text{DIV } \bar{B} = 0$

4. $\text{DIV } \bar{D} = \rho$

where $\bar{E}$ is the electric field density, $\bar{H}$ is the magnetic field intensity, $\bar{B}$ is the magnetic flux density, $\bar{D}$ is the electric displacement, $\bar{J}$ is the current density and $\rho$ is the charge density. In this notation, the bar over a quantity indicates that this is a vector

quantity, i.e., a quantity for which a spatial orientation is required for complete specification. The terms CURL and DIV refer to the CURL and DIVERGENCE mathematical operations. The magnetic field intensity and the magnetic flux density are related by the equations $\bar{B}=\mu\bar{H}$, while the electric field density and the electric displacement are related by the equation $\bar{D}=\varepsilon\bar{E}$. These equations can be used to describe the transmission of electromagnetic radiation through a vacuum or through various media.

It is known that solutions to Maxwell's equations can be obtained through the use of electric scalar potential functions and magnetic vector potential functions. The electric scalar potential is given by the expression:

5. $$\phi(1) = \frac{1}{4\pi\varepsilon_0}\int\frac{\rho(2)}{r_{12}}\,dv(2)$$

where $\phi(1)$ is the scalar potential at point 1, $\rho(2)$ is the charge density at point 2, $r_{12}$ is the distance between point 1 and 2, and the integral is taken over all differential volumes. The magnetic vector potential is given by the expression

6. $$\bar{A}(1) = \frac{1}{4\pi\varepsilon_0 c^2}\int\frac{\bar{J}(2)}{r_{12}}\,dv(2)$$

where A(1) is the vector potential at point 1, $\varepsilon_0$ is the permittivity of free space, $c$ is the velocity of light, $\bar{J}(2)$ is the (vector) current density at point 2, $r_{12}$ is the distance between point 1 and point 2 and the integral is taken over all differential volumes dv(2). The potential functions are related to Maxwell's equations in the following manner:

7. $$\bar{E} = -GRAD\,\phi - \frac{\partial\bar{A}}{\partial t}$$

where GRAD is the gradient mathematical operation, and

8. $$\bar{B} = CURL\,\bar{A}$$

where $\bar{A}$ can contain, for completeness, a term which is the gradient of a scalar function. In the remaining discussion, the scalar function and

the scalar potential function will be taken to be substantially zero. Therefore, attention will be focused on the magnetic vector potential $\bar{A}$.

In the literature, consideration has been given to the physical significance of the magnetic vector potential field $\bar{A}$. The magnetic vector potential field was, in some, instances, believed to be a mathematical artifice, useful in solving problems but devoid of independent physical significance.

More recently, however, the magnetic vector potential has been shown to be a quantity of independent physical significance. For example, in quantum mechanics, the Schroedinger equation for a (non-relativistic, spinless) particle with charge $q$ and a mass m moving in an electromagnetic field is given by

$$9. \quad -\frac{\hbar}{i}\frac{\partial \Psi}{\partial t} = -\frac{1}{2m}\left(\frac{\hbar}{i}\mathrm{GRAD} - q\bar{A}\right)\left(\frac{\hbar}{i}\mathrm{GRAD} - q\bar{A}\right)\Psi + q\phi\Psi$$

where $\hbar$ is Planck's constant divided by $2\pi$, i is $\sqrt{-1}$, $\phi$ is the electric scalar potential experienced by the particle, A is the magnetic scalar potential experienced by the particle and $\Psi$ is the wave function of the particle. The Josephson junction is an example of a device, operating on quantum mechanical principles, that is responsive to the magnetic vector potential.

The main object of the present invention is to provide an information transmission system which utilizes the magnetic vector potential field.

Accordingly the present invention provides an information transmission system comprising generating means which generate a magnetic vector potential radiation field having a curl-free component, and detector means which detect the curl-free component.

Various embodiments of the invention will now be described, by way of example, with reference to the drawings, in which,

Figure 1 shows how a magnetic vector potential at a point is determined.

Figures 2 and 3 show the generation of curl-free magnetic vector potential fields by an infinite solenoid and a toroid respectively.

Figures 4a and 4b show a Josephson junction.

Figure 5 shows a graph of current against field for a Josephson junction.

Figure 6 shows a transmission system.

Figure 7 shows a demodulating system for weak signals.

Figure 8 is a graph for the Figure 7 system.

Figure 9 shows a demodulating system for strong signals.

Figure 10 is a graph for demodulating a strong amplitude-modulated signal.

Figure 11 is a graph for demodulating a strong signal with arbitrary modulation.

Figure 12 shows a group of Josephson-junctions and associated apparatus for determining orientation.

Figure 13 shows how a curl-free magnetic vector potential field rotating in space can establish a line.

Figure 14 shows how a group of directional curl-free magnetic vector potential fields can be used to determine a path to field generating apparatus.

Fig. 1 illustrates the method of determining the magnetic vector potential field $\overline{A}(1)$ 12 (i.e., at point 1). Referring to equation 6, the contribution by the differential volume element at point 2, dv(2), 11, having a current density $\overline{J}(2)$ 13 associated therewith is given by

10. $$d\overline{A}(1)= \frac{1}{4\pi\epsilon_0 c^2} \frac{\overline{J}(2)}{r_{12}} [dv(2)]$$

To obtain equation 6, equation 10 must be integrated. Equations 6 and 10 are valid where $\overline{J}$ is not a function of time.

Fig. 2 shows an example of current configuration producing a substantial component of curl-free magnetic vector potential field. Conductors carrying a current I are wrapped in a solenoidal configuration 21 extending a relatively great distance in both directions along the z-axis. Within solenoid 21, the magnetic flux density $\overline{B}=CURL\,\overline{A}$ is a constant directed along the z-axis with a value

11. $$\overline{B}= B_z = \frac{nI}{\epsilon_0 c^2}$$

where n is the number of conductors per unit length. Outside the solenoid, it can be shown that the components of $\overline{A}$ 23 are

12. $$A_x = -\frac{nIa^2}{2\epsilon_0 c^2} \frac{y}{x^2+y^2}$$

13. $$A_y = \frac{nIa^2}{2\epsilon_0 c^2} \frac{x}{x^2+y^2}$$

14. $$A_z = 0$$

where a is the radius of the solenoid. It can be shown that CURL $\overline{A}$ = 0 for the vector potential field outside of the solenoid 21. To the extent that the solenoid is not infinite along the z-axis, dipole terms (i.e., CURL $\overline{A} \neq 0$ ) will be introduced in the magnetic vector potential field.

Fig. 3 is another example of a current geometry generating magnetic vector potential field with a substantial curl-free component. In this geometry the current carrying conductors

are wrapped uniformly in toroidal configuration 31. Within the toroidal configuration, the magnetic flux, $\overline{B}$ = CURL $\overline{A}$ 32 and the magnetic flux is contained substantially within the torus for $\overline{A}$ 33. In the region external to the torus, $\overline{B}$ = CURL $\overline{A}$ = 0 and the orientation of the magnetic vector potential field in the plane of the torus is parallel the axis of the torus.

Figures 4a and 4b show a Josephson junction, which is a detector capable of detecting the curl-free component of a magnetic vector potential field. The Josephson junction consists of two superconducting plates 41 and 42 separated by a thin insulating material 43. According to the classical electromagnetic theory, the insulating material 43 will prevent any substantial conduction of electrons between the two superconducting regions. However, quantum theory predicts and experiments verify that conduction can take place through the insulating material. The result of this conduction is a net current

15. $$I_{JJ} = k \sin\left(\delta_o + \frac{2e}{\hbar}\int \overline{A}\cdot d\overline{s} + \frac{e}{\hbar} Vt\right)$$

where the magnitude of the current K and the phase $\delta_o$ are determined by intrinsic properties of the junction device, e is the charge of the electron, $\overline{A}$ is an externally applied magnetic vector potential, $d\overline{s}$ is a differential element extending from one superconducting element to the other superconducting element, t is time, and V is an externally applied voltage. This conduction takes place when leads 44 and 45 are coupled with overflow impedance to the current flow. The component of the magnetic vector potential field A perpendicular to the plane of the junction determines the current $I_{JJ}$..

Fig. 5 shows the relationship of the Josephson junction device current as a function of externally applied magnetic vector potential field. The integral $\int \bar{A} \cdot d\bar{s}$ as $\bar{A}$ is increased, results in a change of phase for $I_{JJ}$. This change in phase produces the oscillating behavior for $I_{JJ}$ as a function of magnetic vector potential field perpendicular to the Josephson junction. This relationship will hold as long as there is no externally applied voltage to the Josephson junction (i.e., V = 0).

Fig. 6 shows a system for the transfer of information using a curl-free vector potential field. Apparatus 60 is comprised of a current source 64 and apparatus 65 configured to generate a magnetic vector potential field having a substantial curl-free component using the current from the current source. The magnetic vector potential field is established in the intervening media 61 and impinges upon a magnetic vector potential field detector 66 of retrieving apparatus 63. The property of detector 66 indicating the presence of a magnetic vector potential field is analyzed in apparatus 67 for information content.

In order to transmit information, it is necessary to vary the field carrying the information. No mention has been made in the previous discussion of the effect of modulating the current source. It will be clear that the finite field propagation velocity will cause a delay between a change in the vector potential field produced by the generator of the field and the detection of that change by the detector located at a distance from the generator. However, these delay effects will be ignored in this discussion. With respect to curl-free vector potential field generating apparatus, any limitation on the upper limit of generated frequency components imposed will be the result of parameters impacting rapid changes in the current. Thus parameters such as

inductance can provide a limit to ability to impose high frequency modulation on the vector potential field.

With respect to the media between the field generating apparatus and the field detecting apparatus, two effects are important. First as implied by equation (1)

16. $$\text{CURL}\ \bar{E} + \frac{\partial \bar{B}}{\partial t} = \text{CURL}\ \bar{E} + \text{CURL}\ \frac{\partial \bar{A}}{\partial t} = \text{CURL}\left(\bar{E} + \frac{\partial \bar{A}}{\partial t}\right) = 0$$

or

17. $$\frac{\partial \bar{A}}{\partial t} = -\bar{E}$$

Therefore as modulation is imposed on the vector potential field, the change in the vector potential field will produce an electric field intensity. The electric field intensity will produce a flow of current in conducting material or a temporary polarization in polarizable material. With respect to materials demonstrating magnetic properties, the bulk magnetic properties are responsive to the magnetic flux density $\bar{B}$. However, $\bar{B}$ = CURL $\bar{A}$ = 0 for the curl-free vector potential field component. Therefore, the interaction of the curl-free magnetic vector potential field is weaker in magnetic materials than is true for the general magnetic vector potential field. Media effects and especially the conductivity of the intervening media will provide a mechanism delaying the achievement of steady state condition for the curl-free magnetic vector potential field (i.e., because $\frac{\partial \bar{A}}{\partial t} = -\bar{E}$ ) field and thus causing a media limitation on frequency. A curl-free magnetic vector potential field can be established in materials that are not capable of transmitting normal electromagnetic radiation. The media delay problem can be compensated for by lowering the frequency spectrum of the modulation on the curl-free magnetic vector potential field.

With respect to the detector, the Josephson junction can be constructed to provide responses of sufficiently high frequency so that

this element of the system is not typically a factor limiting frequency of information transfer.

As indicated in equation 12, the effect of the application of a vector potential field to a Josephson junction, in the absence of a voltage applied to the junction, is to change the phase of the sine function determining the value of the junction current $I_{JJ}$. The excursions from zero magnetic vector potential field can be analyzed and a determination made of the modulation applied to the field. When a voltage is applied to the Josephson junction, oscillation occurs in the $I_{JJ}$ as will be seen from the Vdt term of equation 12. The application of an external vector potential field causes the phase of the oscillation to change. By monitoring the phase change in the Josephson junction oscillations, the modulation of the vector potential field can be inferred.

Another method of detection of a magnetic vector potential field utilizes the property that $\frac{\partial \bar{A}}{\partial t} = -\bar{E}$. Thus, for example, by measuring the changes in a material resulting from the application of the electric field, the magnetic vector potential field causing the electric field can be inferred.

Figures 7 and 8 show apparatus for demodulating a weak curl-free magnetic vector potential field. A weak curl-free magnetic vector potential field is one for which the maximum amplitude of the field results in a relatively minor change in phase. The component perpendicular to Josephson junction 72 of curl-free vector potential field 71 causes a change in the phase of Josephson junction current, $I_{JJ}$ flowing in conductor 73. The change in current $I_{JJ}$ is applied through transfer means $I_{JJ}$ to analog-to-digital converter 79. The resulting digitalized signal is applied to storage analyzer and display device 78. Device 78 has stored therein calibration data which

relates the perpendicular component of appliance vector potential field $\overline{A}$ to the resulting Josephson junction current $I_{JJ}$, (i.e., $A = f(I_{JJ})$). In essence, the relationship illustrated by Figure 5 is available to convert the resulting Josephson junction current $I_{JJ}$ to a quantity related to $\overline{A}$. Thus it is possible to reconstruct the magnitude of the impinging magnetic vector field potential and the modulation can be extracted therefrom.

Figure 9 shows apparatus for demodulation strong curl-free vector potential fields. The strong field apparatus is used when the impinging magnetic vector potential field results in multiple phase change for the Josephson junction current. The weak field apparatus has response too slow to determine effectively the magnitude of the vector potential field. The change in component perpendicular to the Josephson junction 72 of the curl-free vector potential field causes a change in the Josephson junction current $I_{JJ}$ flowing in conductor 73. Transfer means 74 causes a signal related to $I_{JJ}$ to be applied to overdriven amplifier 91. The output signal from amplifier 91, essentially a series of square waves, is applied to differential circuit 92. The output signal from circuit 92 is applied to counter 98 and the resulting counts are stored in storage, analyzer and display circuit 94. The result of using this apparatus on an amplitude modulated sinewave signal is show in Figure 10. In Figure 11, the result of using this apparatus to analyze a general curl-free vector potential field signal is shown.

Considering Figure 10 in more detail, the analysis unit analyzes the count in the counter 93 on each half cycle. The total count is proportional to the signal amplitude.

Considering more generally

the demodulation of a strong curl-free magnetic vector potential field, the use of digital techniques provides a convenient method of analysis. In essence, four pulses are generated for each change of phase of 360$^{o}$. Pulses will (except for noise signals) be generated only when the magnetic field is varying. Thus, several forms of modulation can be utilized. The length of time a vector field varies, the relative slope of the changing vector field, and the relative height of the vector potential field can all be used as modulating methods.

The presence of pulses can indicate that the vector field is changing, the relative number of pulses during a period of vector field can indicate the relative magnitude of the change, and the relative density of pulse during a vector field change can indicate the relative vector field slope.

In addition, an amplitude modulated signal can be similarly demodulated. In the case of amplitude modulation, however, there can be little reason to use the carrier frequency. To demodulate an amplitude-modulated signal, the time intervals of high (or low) density of pulses can indicate the frequency of the carrier. The number of pulses between the high (or density) pulse density region can indicate the relative modulation imposed on the signal.

Figure 11 shows the signals in the apparatus of Figure 9 for a region of change of the curl-free magnetic field component perpendicular to the plane of the Josephson junction. It will be clear that the number of counts in the counter 93 will depend, for a given change in the field, only on the magnitude of the change.

In order to determine a distance, it is necessary in general to provide a predetermined change in the curl-free vector potential field. It is also necessary to calibrate the output signal of the detecting apparatus as a function of distance and as a function of field magnitude for field produced by magnetic vector potential field generating apparatus. Although the calibration can be done theoretically, it is generally more convenient to calibrate the detecting apparatus experimentally. However, two related problems can arise. First, the apparatus generating the curl-free magnetic vector potential field is highly directional, the field resulting from the finite solenoid has a maximum value in the plane through the center of the solenoid. In addition, the Josephson junction is also directional. Thus it is necessary to orient the generating apparatus and Josephson junction apparatus during a distance measurement. A plurality of Josephson junctions can be used in the detecting apparatus and the detecting apparatus output signal can be the vector sum of the individual output signal of apparatus associated with the plurality of Josephson junction. This procedure eliminates the requirement of the rotation of the Josephson junction device, but orientation of the generating apparatus can still be required. After the detecting apparatus is calibrated with predetermined generating apparatus signals the detecting apparatus can be placed at an unknown distance, (i.e., in sea water) from the generating apparatus. The generating apparatus can be rotated slowly emitting a predetermined signal and the detecting apparatus can use the optimum signals for the actual measurement of the distance. Because of the directionality of the curl-free magnetic field, it will be clear that rotating the field generating apparatus can result in modulation which can be used in the measurement.

Figure 12 shows an arrangement of Josephson junction devices which allows the spatial orientation of curl-free magnetic vactor potential $\bar{A}$ 48 to be determined. Three Josephson junction devices and associated apparatus 63 are utilized. The three Josephson junctions are oriented so that no two are in the same plane. In the preferred embodiment the planes of the Josephson junctions are mutually perpendicular. In the analyzing apparatus, the magnitude of the vector field is determined. However, because only the component perpendicular to the junction influences this phase of the device, the value of the vector potential field determined by each analyzing circuit is in fact one of the three components of the vector field. By combining the three components, the spatial orientation of the vector potential field can be determined. This vectorial combining can be performed in combining apparatus 74.

Figure 13 shows the procedure for establishing spatially rotary curl-free vector potential fields. Field generating apparatus is placed in location 1. The apparatus consists for example of mutually perpendicular solenoids. A sine wave current is introduced into each solenoid approximately 90% out of phase with the current of the other solenoid. The detector will see a rotating vector field. However, because of this characteristic, should the receiver move off of the line formed by the intersection of the planes through the solenoid, a more elliptical field pattern will be observed. Thus the detecting apparatus can determine when the apparatus itself is on the path line.

Referring to Figure 14, a path plane can be established by having three field generating apparatus (e.g., solenoids) rotate at slight angles for the other two solenoids. By modulating the three solenoids with different frequencies, the detecting apparatus can determine when

the apparatus is above or below plane 2. In addition, the spatial orientation of the vector field in plane 2 can identify a direction to the generating apparatus.

In order to determine the direction of a field generating apparatus, it may be necessary to vary the curl-free magnetic vector potential field. It may also be necessary to determine the orientation of the field. Because the Josephson junction output is determined by the field perpendicular to the plane of the junction, three Josephson junctions are necessary to determine the orientation.

If a rotating field is established which defines a line to the generating apparatus, the three Josephson junction detecting apparatus can be used to determine if the detecting apparatus is still aligned with the rotating field. It will be clear that a single Josephson junction can be rotated in space and can replace the three separate Josephson junctions.

The curl-free vector potential field generating apparatus can have a maximum amplitude in a planar region. The field generating apparatus can be rotated and the field detecting apparatus can establish, by means of determination of the vector field orientation, when the vector field is the maximum, the direction to the field generating apparatus. This technique can be used when apparatus for generating a plurality of planar fields, having a single origin but separated by a small angle, are used to establish a path. By modulating the field differently, an operator of a vehicle can determine, once in the correct plane, if he has left it.

CLAIMS

1. An information transmission system, characterized by generating means which generate a magnetic vector potential radiation field having a curl-free component, and detector means which detect the curl-free component.

2. A system according to claim 1 characterized by means for modulating the field generated by the generating means.

3. A system according to either previous claim characterized in that the detector means comprise a Josephson junction.

4. A system according to claim 3 characterized in that the detector means includes means for monitoring current phase changes in the Josephson junction.

5. A system according to either of claims 3 and 4 characterized in that the detector means includes means for generating pulses corresponding to the magnitude of change in the curl-free component.

6. Distance measuring apparatus comprising a system according to any previous claim, characterized in that the generating means generates a curl-free component of predetermined magnitude, and the detector means determines the magnitude of the curl-free component at the detector means as a function of the distance between the generating means and the detector means.

7. Distance measuring apparatus according toclaim 6, characterized in that the generating means and detector means are oriented to provide maximum field amplitudo at the detector means.

8. Direction determining apparatus comprising a system according to any previous claim characterized by a plurality of detectors each responsive to a different predetermined component of the curl-free component, and means responsive to the detectors to determine the orientation of the curl-free component.

9. Direction determining means according to claim 8 characterized in that the generating means can vary the orientation of the curl-free component and the detector means can determine the amplitude of the curl-free component.

10. Direction determining apparatus comprising a system according to any one of claims 1 to 7 characterized in that the generating means comprises a plurality of generators which generate vector fields with different modulations in different planes rotated relative to one another, and the detector means demodulate the field modulation and determine the orientation of the fields.

11. Direction determining apparatus comprising a system according to any one of claims 1 to 7 characterized in that the generating means generates a rotating field along a predetermined line, and the detector means detects the magnitude and orientation of the rotating field.

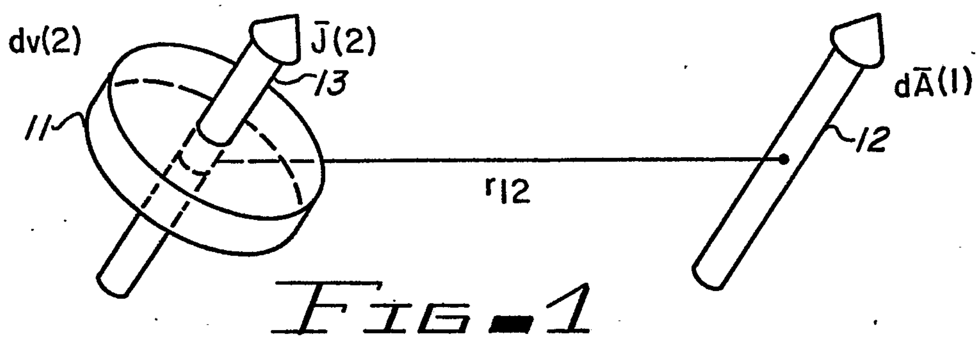


FIG. 1

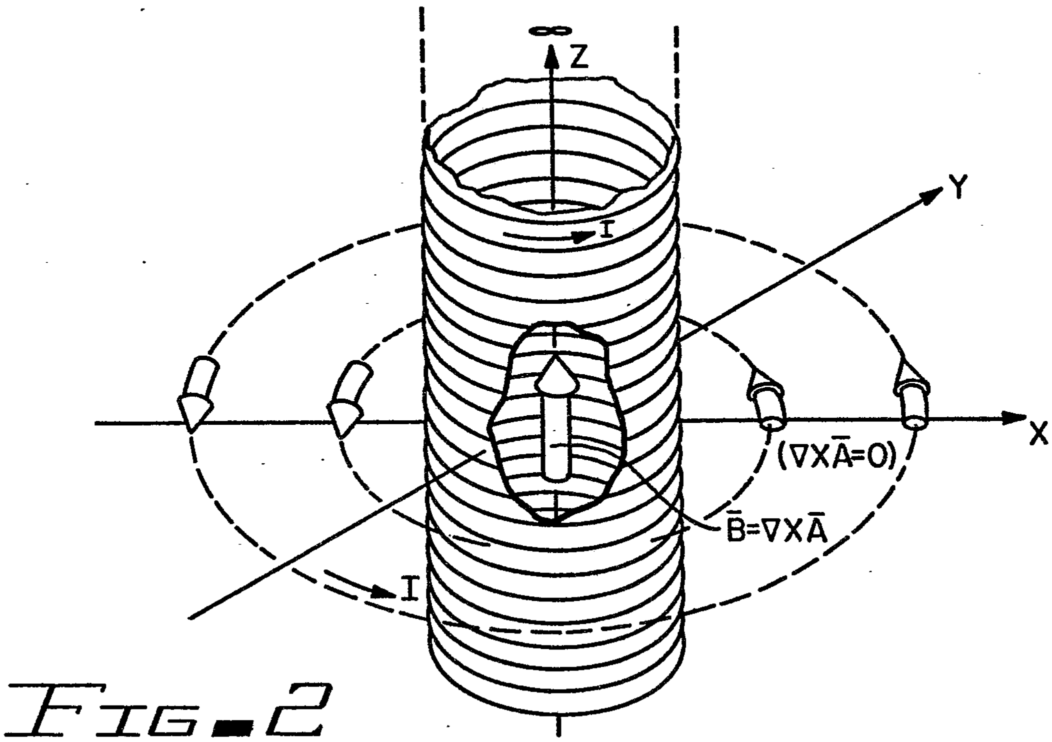


FIG. 2

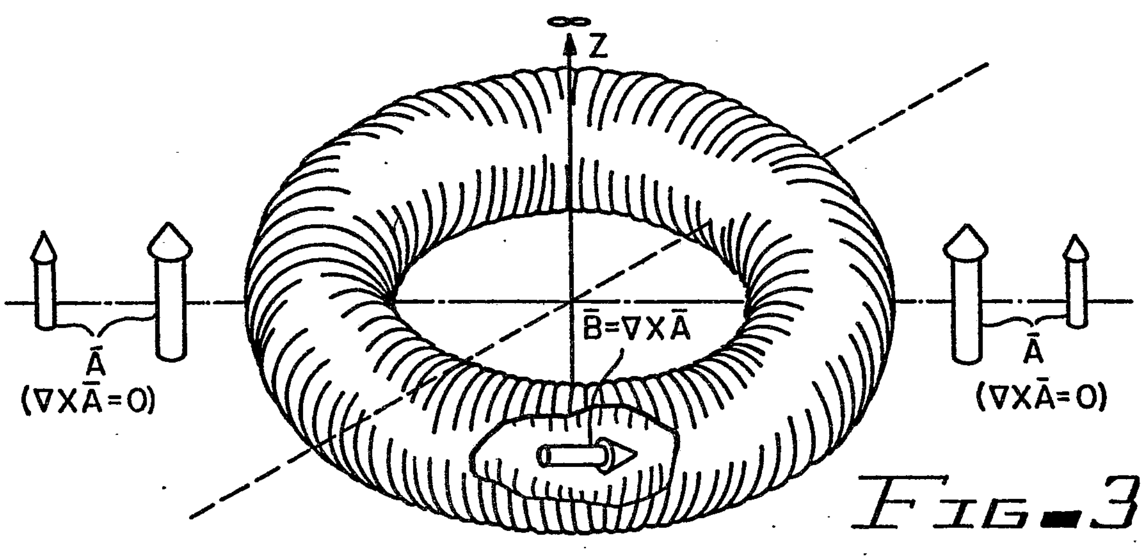


FIG. 3

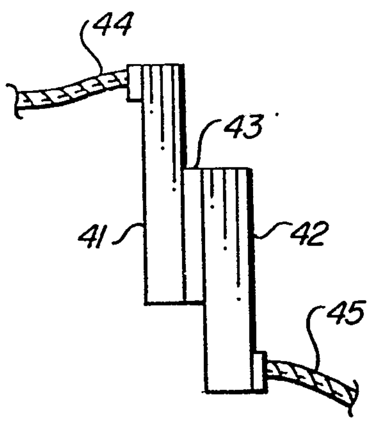


Fig. 4a

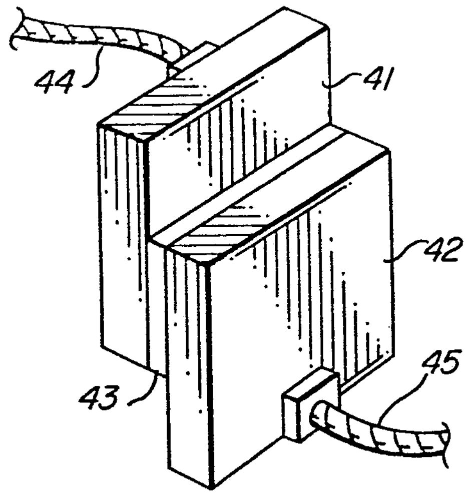


Fig. 4b

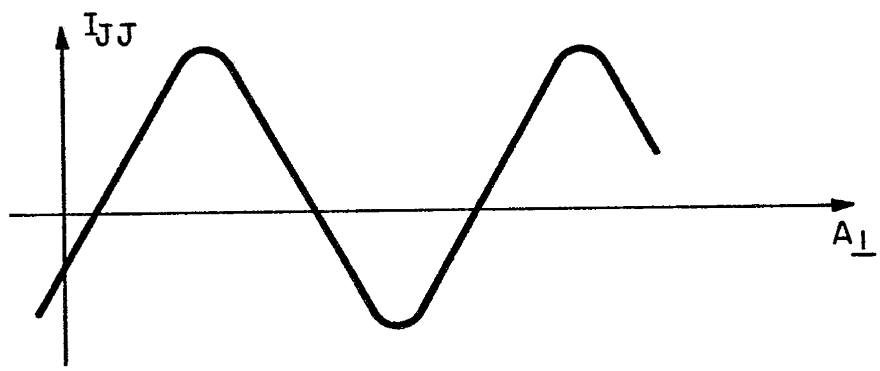


Fig. 5

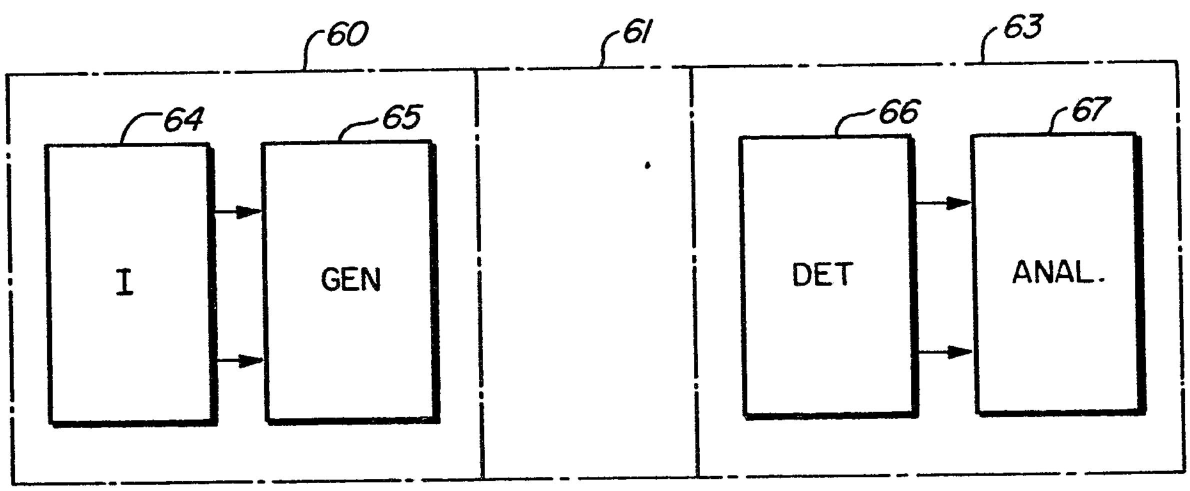


Fig. 6

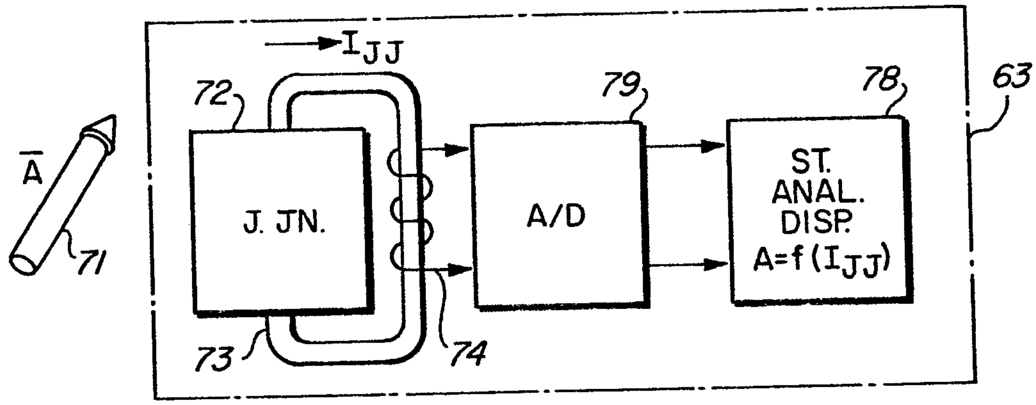


FIG. 7

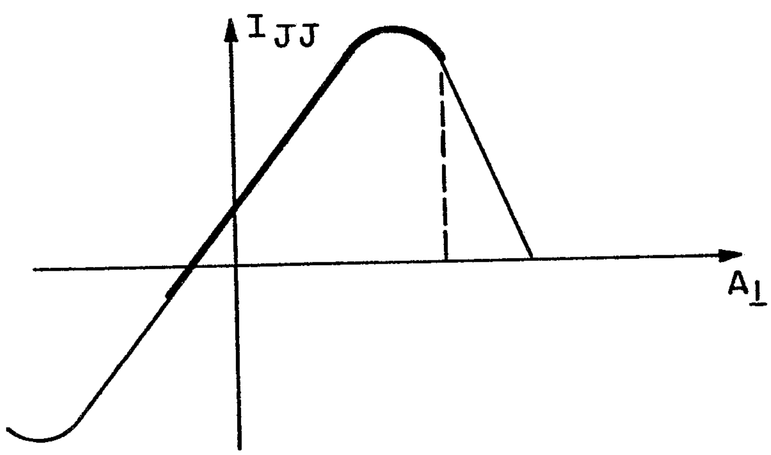


FIG. 8

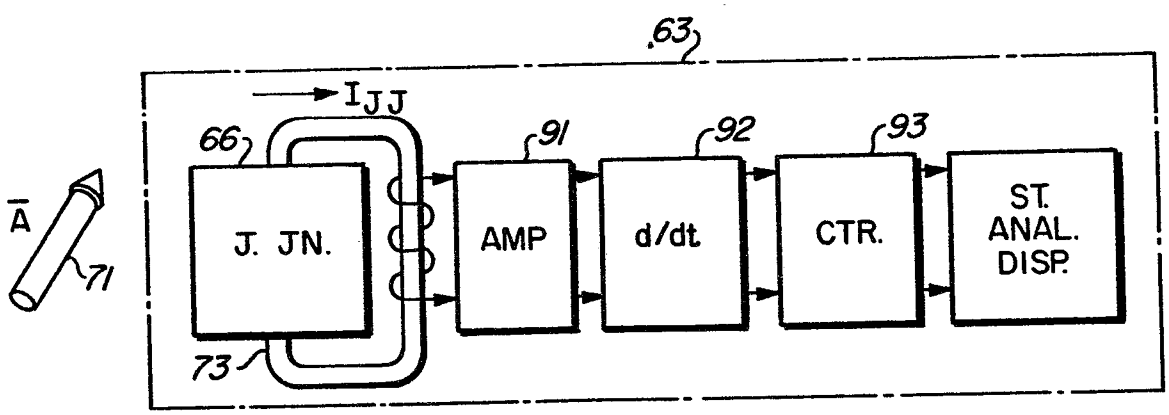


FIG. 9

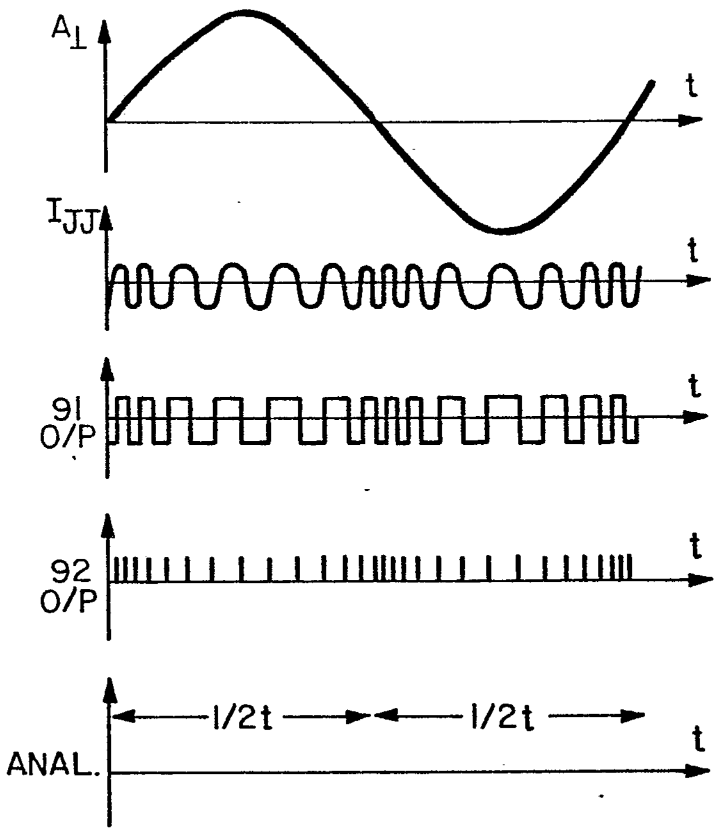

A⊥
t
IJJ
t
91
O/P
t
92
O/P
t
1/2t
1/2t
ANAL.
t


FIG. 10

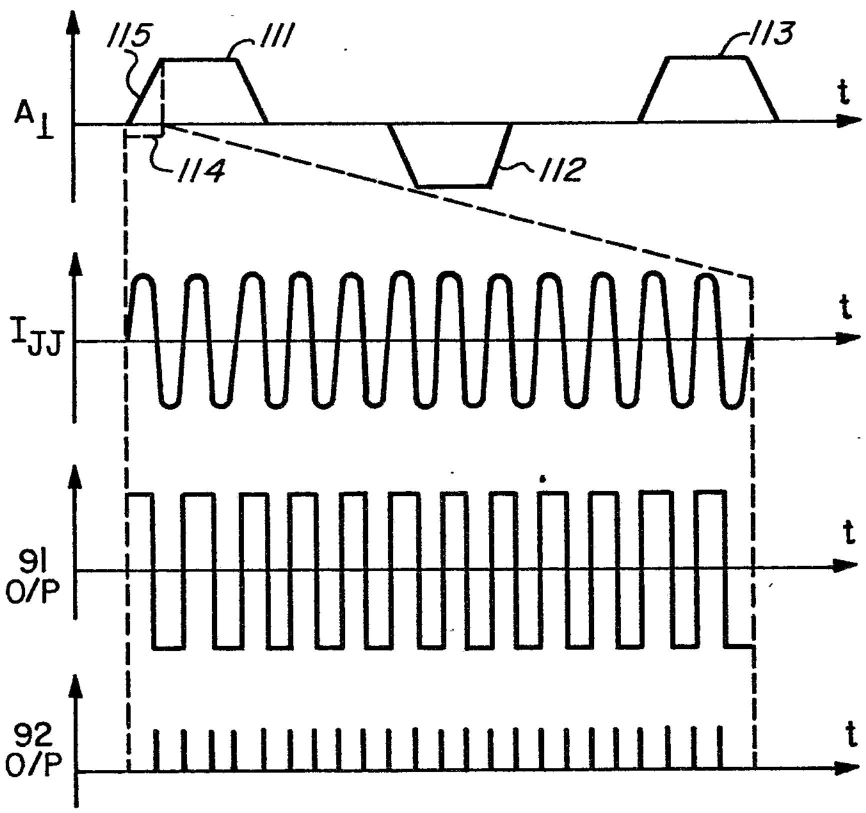

115
111
113
A⊥
t
114
112
IJJ
t
91
O/P
t
92
O/P
t


FIG. 11

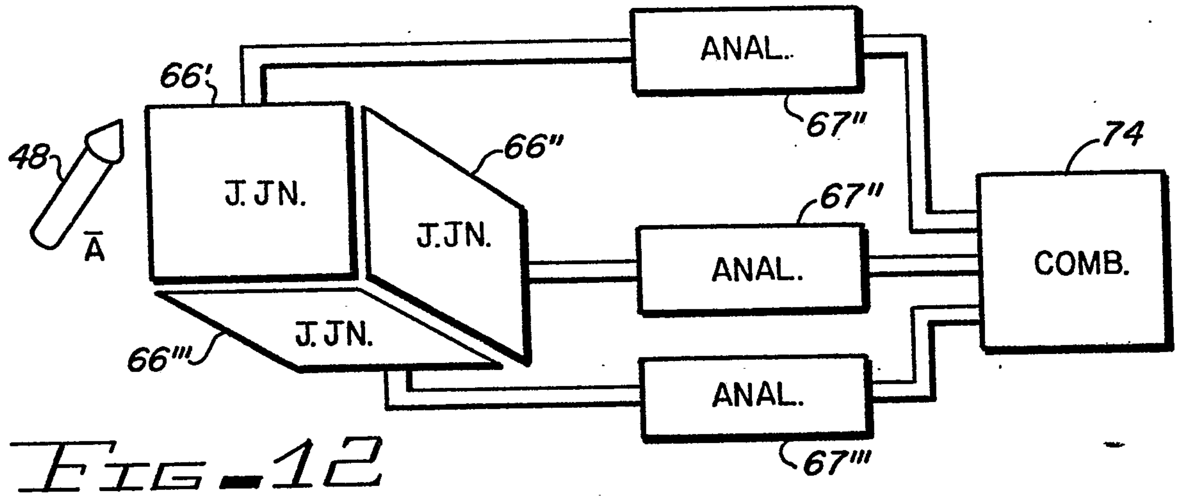


FIG_12

FIG_13

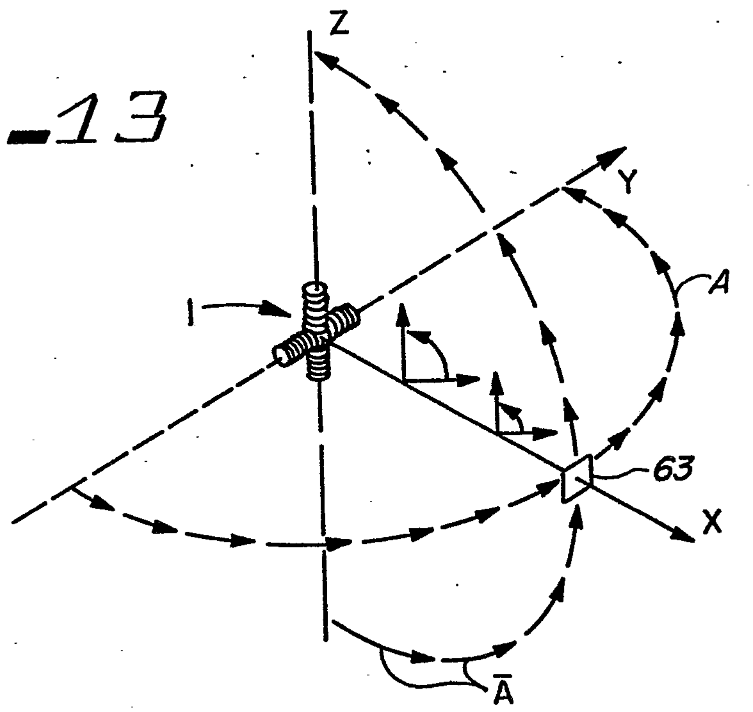


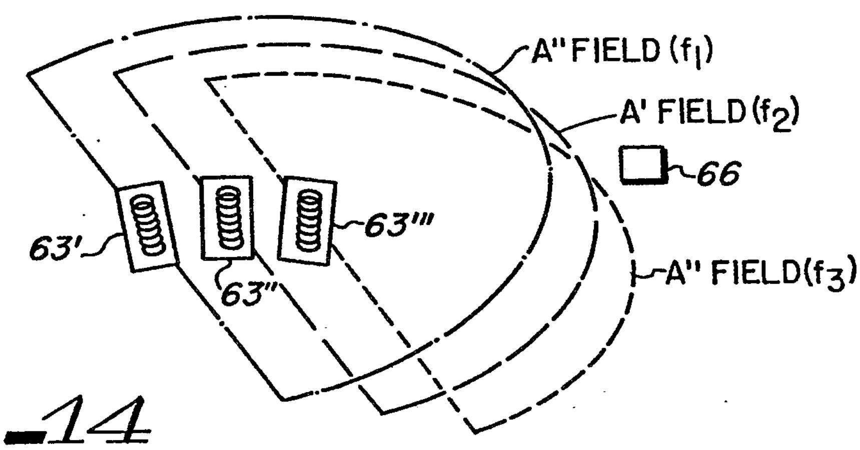


FIG_14